# EUROPÄISCHE PATENTSCHRIFT

(11) **EP 4 511 954 B1**
(45) Veröffentlichungstag und Bekanntmachung des Hinweises auf die Patenterteilung: **27.05.2026**
(21) Anmeldenummer: 23730522.2
(22) Anmeldetag: 05.06.2023
(51) Int. Cl.: H02K 15/022, B33Y 80/00, H02K 15/021, H02K 15/02

(54) **VERFAHREN UND VORRICHTUNG ZUM HERSTELLEN VON BLECHPAKETEN AUS BLECHLAMELLEN**
METHOD AND DEVICE FOR THE PRODUCTION OF SHEET METAL PACKAGES FROM SHEET METAL LAMINATIONS
PROCÉDÉ ET DISPOSITIF POUR LA FABRICATION DE PAQUETS DE TÔLES À PARTIR DE LAMELLES DE TÔLE

(30) Priorität: 29.06.2022 DE 102022116203
(43) Veröffentlichungstag der Anmeldung: 26.02.2025
(73) Patentinhaber: BAUER Lean-Engineering GmbH, Vaihingen/Enz, 71665 (DE)
(72) Erfinder: BAUER, Steffen, 74374 Zaberfeld (DE); KAUFFMANN, Jochen, 73061 Ebersbach (DE); LANG, Christian, 71655 Vaihingen/Enz (DE)
(74) Vertreter: Fleck, Hermann-Josef
(86) Internationale Anmeldenummer: PCT/EP2023/064999
(87) Internationale Veröffentlichungsnummer: WO 2024/002627

(56) Entgegenhaltungen:
- WO-A1-2022/009878
- JP-A- 2015 012 756
- JP-A- 2020 061 925
- KR-A- 20160 145 289
- KR-B1- 101 570 381
- US-A1- 2019 240 965
- US-A1- 2021 057 969

## Beschreibung

Die Erfindung bezieht sich auf ein Verfahren zum Herstellen von Blechpaketen aus Blechlamellen, bei dem ein Klebemedium als mindestens ein Klebepunkt auf die Oberseite der Oberfläche einer Blechisolation eines horizontal bezüglich der Schwerkraftrichtung geführten Blechbandes mittels einer Auftragseinheit über einen Auftragskopf aufgetragen wird. Ferner bezieht sich die Erfindung auf eine Vorrichtung mit einer Auftragseinheit zum Herstellen von Blechpaketen aus Blechlamellen, die einen Auftragskopf, zumindest einen Verteiler für das Klebemedium mit zumindest einer Zuführung für das Klebemedium und ein Gestell zur Aufnahme des/der Verteiler und des mindestens einen Auftragskopfes aufweist.

Ein Verfahren und eine Vorrichtung zum Herstellen von Blechpaketen aus Blechlamellen dieser Art ist in der WO 2022/009878 A1 angegeben. Dabei ist in einem oberen Stanzteil ein Auftragskopf für Klebemittel enthalten und der Klebemittelauftrag erfolgt bei der Stanzbewegung.

Ein weiteres Verfahren und eine Vorrichtung zum Herstellen von Blechpaketen aus Blechlamellen unter Aufbringung von Klebemittel und eine dazu ausgebildete Vorrichtung sind auch in der KR 2016 0145289 A gezeigt.

Ein weiteres Verfahren und eine Vorrichtung zum Herstellen von Blechpaketen aus Blechlamellen sind in der EP 1 833 145 B1 angegeben.

Die Herstellung von aus Blechlamellen bestehenden Blechpaketen für elektrische Maschinen (Motoren, Generatoren) erfolgt wirtschaftlich in einem Stanzprozess. Dabei wird ein auf einer Haspel befindliches Coil, dessen magnetische Eigenschaften, Isolationsschicht sowie Breite bereits auf das zu produzierende Blechpaket abgestimmt sind, einer Stanzpresse zugeführt. Der Haspel nachgelagert befindet sich oftmals eine Richteinheit. Das an der Stanzpresse befindliche Vorschubsystem fördert das Blechband des Coils schrittweise in das in der Stanzpresse befindliche Stanzwerkzeug. Die Schrittweite ist ebenfalls auf das herzustellende Blechpaket abgestimmt. Innerhalb der Stanzpresse erzeugt das Stanzwerkzeug schrittweise die Innenkonturen der Blechlamellen. Nach Fertigstellung der Innenkonturen wird die Blechlamelle aus dem Blechband des Coils mit dem Auslochstempel ausgestanzt und der sogenannten Auslochmatrize übergeben. Zur Herstellung eines Blechpakets werden in der Auslochmatrize die Blechlamellen zu einem Blechpaket verbunden. Mit jedem Arbeitshub der Stanzpresse wächst das Blechpaket an. Unterhalb der Auslochmatrize befindet sich eine Paketbremse, die dafür sorgt, dass die erforderliche Gegenkraft zum Fügen der Blechlamellen zum Blechpaket aufgebracht wird. Bei jedem Arbeitshub der Stanzpresse werden die in der Auslochmatrize und Paketbremse befindlichen Blechpakete um die Dicke der Blechlamelle nach unten bewegt. Die Pakettrennung erfolgt dadurch, dass die Einrichtung zur Herstellung der Paketverbindung einmalig ausgesetzt wird, sodass sich einmalig zwei benachbarte Blechlamellen nicht verbinden können. Innerhalb der Paketbremse können sich mehrere Blechpakete befinden. Nachdem die Blechpakete durch die Paketbremse transportiert worden sind, wird das am unteren Ende der Paketbremse befindliche Blechpaket in der Regel an ein Fördersystem übergeben, welches die fertiggestellten Blechpakete aus der Stanzpresse fördert.

Zum Verbinden der Blechlamellen zu Blechpaketen innerhalb des Stanzprozesses kommen verschiedene Verfahren zur Anwendung, nämlich das Stanzpaketieren, das Backpaketieren und das Klebepaketieren.

Das Stanzpaketieren stellt eine punktuelle Verbindung zwischen benachbarten Blechlamellen her. Beim Stanzpaketieren werden in jede Blechlamelle Prägenoppen eingebracht. In der Auslochmatrize werden die Prägenoppen benachbarter Blechlamellen ineinandergedrückt. Die Reibkraft der ineinandergedrückten Prägenoppen erzeugt die Haltekraft zwischen benachbarten Blechlamellen und lässt so schrittweise ein Blechpaket entstehen. Die Pakettrennung erfolgt durch Stanzen einer Aussparung, die so dimensioniert und positioniert ist, dass an diesen Stellen mindestens einmalig keine Prägenoppen eingebracht werden können. Somit können sich in der Auslochmatrize mindestens einmalig zwei benachbarte Blechlamellen nicht verbinden. Das Stanzpaketieren ist ein weltweit angewendetes Verfahren zur Herstellung von Blechpaketen. Die dabei eingebrachten Prägenoppen führen jedoch zur elektrischen Kontaktierung benachbarter Blechlamellen, was zu sogenannten Eisenverlusten führt und damit den Wirkungsgrad elektrischer Maschinen reduziert.

Das Backpaketieren bildet eine besondere Form der Herstellung von Blechpaketen aus Blechlamellen und besteht darin, dass die Isolationsschicht des Blechbandes des Coils zusätzlich Klebeeigenschaften aufweist. Die Klebeeigenschaften sind so gewählt, dass diese erst unter Temperatureinwirkung und/oder mittels eines Aktivators aktiviert werden. Die Klebeeigenschaft der Isolationsschicht sorgt für eine vollflächige Verbindung zwischen den Blechlamellen. Ein solches Verfahren ist in der EP 2 450 189 A1 beschrieben, wobei das Verfahren in den Stanzprozess integriert werden kann. Die erforderlichen Einrichtungen zur Integration des Backpaketierverfahrens in den Stanzprozess sind komplex und daher kosten- und wartungsintensiv.

Mit dem Klebepaketieren, wie es in der vorstehend genannten EP 1 833 145 B1 angegeben ist, werden der Wirkungsgradnachteil des Stanzpaketierens und der hohe energetische Aufwand des Backpaketierens eliminiert. Dabei werden Klebepunkte in Tropfenform auf die Isolationsschicht des Blechbandes aufgetragen. In der Auslochmatrize des Stanzwerkzeugs werden benachbarte Blechlamellen aufeinandergepresst. Dabei verteilen sich die Klebepunkte auf den Oberflächen benachbarter Blechlamellen. Beim Durchlaufen der unter der Auslaufmatrize befindlichen Paketbremse wird die Zeit generiert, in der das Klebemedium soweit mit den Blechlamellen vernetzt, dass zumindest eine Handfestigkeit der Blechpakete beim Verlassen der Paketbremse entsteht. Diese Art des Klebepaketierens erzeugt im Bereich der Auftragspunkte eine flächige Verbindung zwischen den Blechlamellen, ohne die magnetischen Eigenschaften des Blechbandes und damit des Endproduktes negativ zu beeinflussen. Bei diesem in den Stanzprozess integrierten Klebepaketierverfahren werden die Klebepunkte mittels eines Piezo-Mikrodosiersystems auf die Bandoberfläche ober- und/oder unterseitig aufgetragen. Die Auftragseinheit besteht aus mindestens einem berührungslos arbeitenden Auftragskopf und weist mindestens einen mit einem gesteuerten Ventil verbundenen Aktor auf, der mit einem Piezokristall versehen ist. Mit diesen in der Auftragseinheit befindlichen, aktiv bewegten Teilen kann somit auch der unterseitige Auftrag des Klebstoffs erfolgen. Die Pakettrennung erfolgt, wenn die Anlagensteuerung ein Unterbrechungssignal zum Aussetzen des Klebepunktauftrags an das Piezo-Mikrodosiersystem sendet. Zum Schutz der auf das Blechband aufgetragenen Klebepunkte sind Aussparungen in dem Werkzeug, den Matrizen und den Führungen vorgesehen. Die erforderlichen Einrichtungen zur Integration des Klebepaketierverfahrens in den Stanzprozess sind daher ebenfalls komplex, wartungsintensiv und somit auch kostenintensiv.

Die DE 203 18 993 U1 zeigt ein Klebepaketierverfahren, bei dem ein Schneidstempel vorzugsweise eine ebene Stirnfläche besitzt, die aber auch unterbrochen sein kann und somit Aussparungen enthalten kann. Es ist gezeigt, dass Klebepunkte von unten auf das Blechband aufgetragen werden. Dieses Klebepaketierverfahren basiert darauf, dass das Bandmaterial mit der Oberfläche der Dosiereinheit in Berührung kommt, wodurch eine Kugel bewegt und somit der Klebefluss freigegeben wird.

Die EP 3 217 520 A1 und ähnlich auch die KR 101566486 B1 zeigt ein Klebepaketierverfahren, bei dem eine Applikationseinheit des Klebemediums in das Unterteil des Stanzwerkzeugs integriert ist. Das Klebemedium wird unter Druck und mit einer vorgegebenen Flussrate an Auslassdüsen zur Verfügung gestellt, um es auf die unterseitige Oberfläche des Blechbandes aufzutragen. Ein Aktivator für das Klebemedium kann gemeinsam mit einer Bandschmierung aufgetragen werden. Nicht übertragene Klebetropfenreste können in Kanälen durch das Werkzeugunterteil abgeleitet werden.

In der JP 2001321850 A ist ein Klebepaketierverfahren vorgestellt, bei dem innerhalb des Stanzwerkzeugs Klebetropfen auf das Blechband aufgetragen werden. Vor dem Auftrag der Klebetropfen auf das Blechband wird dieses gereinigt. Die Aushärtung des Klebemediums kann durch Wärmezufuhr in der Paketbremse unterstützt werden.

Bei einem in der DE 35 35 573 A1 angegebenen Klebepaketierverfahren, bei dem die Steuerung der Pakettrennung auf Basis einer Messung der Dicke eines zugeführten Blechbandes erfolgt, werden die Einzellamellen innerhalb des Stanzprozesses zu Blechpaketen mit einem Klebemedium verbunden, das über ein Dosiergerät aufgetragen wird. Die Zuführung des Klebemittels erfolgt mit einem Schlauch vom Dosiergerät zum Auslochstempel und mit oder ohne Schlauch durch den Auslochstempel. Im Kanal unter einer Stanzteilableitungsvorrichtung und einer Paketbremse kann zur Unterstützung der Klebstoffaushärtung eine Heizvorrichtung vorgesehen sein. Wird ein Zwei-Komponentenkleber verwendet, so erfolgt die Dosierung direkt durch den Schlauchkanal der Druckplatte und den Schnittstempeleinsatz. Dabei wird der Aktivator phasenversetzt an den vorgegebenen Klebepunkten mit handelsüblichen Dosiernadeln auf die Unterseite des Stanzteils aufgebracht. Bei Verwendung von Einkomponentenkleber wird der Kleber mit der Dosiernadeleinrichtung durch die Dosiernadeln auf die Unterseite des Stanzteils aufgebracht.

Alle am Markt bekannten Klebepaketierverfahren zur Herstellung von Blechpaketen aus Blechlamellen verwenden aufwändige Verteiler- und Dosier- bzw. Auftragssysteme für das Klebemedium und/oder neigen zur Verschmutzung im Bereich des Auftragskopfes.

Der Erfindung liegt die Aufgabe zugrunde, ein Verfahren bzw. eine Vorrichtung der eingangs genannten Art zur Verfügung zu stellen, das bzw. die eine möglichst einfache und wartungsarme und damit kostengünstige Applikationsmethode zum Auftragen von Klebepunkten auf die Oberfläche des Blechbandes oder der Blechlamellen bietet.

Diese Aufgabe wird erfindungsgemäß bei der Herstellung von Blechpaketen nach dem Verfahren mit den Merkmalen des Anspruchs 1 und bei der Vorrichtung mit den Merkmalen des Anspruchs 13 gelöst.

Bei dem Verfahren ist vorgesehen, dass die Übergabe des Klebemediums als mindestens ein Klebepunkt auf die Oberfläche der Blechisolation des Blechbandes oder einer daraus geschnittenen Blechlamelle ohne bewegliche Bauteile in dem Auftragskopf erfolgt, wobei zur Übertragung des Klebemediums in Form des mindestens einen Klebepunkts der Auftragskopf senkrecht relativ zur Oberfläche des Blechbandes bewegt wird.

In erfindungsgemäßer Ausgestaltung des Verfahrens ist zu einer exakten Übertragung des Klebemediums auf die Blechisolation bzw. die Blechlamelle vorgesehen, dass die Übergabe des Klebemediums als Klebepunkt auf die Blechisolation des Blechbandes oder der Blechlamelle durch die Bewegungsenergie eines Verteilers der Auftragseinheit und des Auftragskopfs, und die Schwerkraft des Klebemediums mit oder ohne Nutzung der Adhäsionskraft des Klebepunkts am Blechband unterstützt wird.

Bei der Vorrichtung ist vorgesehen, dass der Verteiler mit einem additiven Verfahren, insbesondere einem 3D-Druckverfahren, hergestellt ist.

Mit diesen Maßnahmen ist das Klebeverfahren vorteilhaft in den Herstellungsprozess der Blechpakete integriert, wobei es während des Stanzprozesses durchgeführt wird oder diesem nachgelagert ist. In eingehenden Untersuchungen der Erfinder hat sich ergeben, dass mit diesen Maßnahmen ohne aufwändige Gestaltung der Zuführeinheit ohne bewegliche Bauteile im Auftragskopf die Klebstoffzuführung zum Aufbringen der Klebepunkte exakt nach Vorgabe gesteuert oder geregelt werden kann. Eine Verschmutzung des Dosiersystems, insbesondere des Auftragskopfs wird zumindest weitgehend vermieden. Durch die Zuführung des Klebemediums unter bezüglich der Schwerkraftrichtung senkrechter Bewegung des Auftragskopfs, also ohne darin vorhandene bewegliche Teile und deren Betätigung wie beim Stand der Technik, auf die Oberseite der Oberfläche der Blechisolation wird das Klebemedium unter Wirkung der Schwerkraft und durch die abstimmbare Bewegungsenergie in genau vorgebbarer Menge abgelöst, wobei gegebenenfalls auch ein Einfluss einer dabei wirkenden Kohäsionskraft mit einbezogen werden kann. Durch die so genutzte Kombination physikalischer Kräfte in Kombination mit dem einfachen Aufbau der Auftragseinheit wird ein präzise und zuverlässig und dabei wirtschaftlich arbeitendes Auftragssystem für das Klebmedium bei der Paketierung von Blechlamellen erhalten. Anzumerken ist, dass der Ausdruck "-punkt" vorliegend nicht streng mathematisch zu verstehen ist, sondern der vorliegend praktischen Gegebenheit angemessen, aufgrund seines Volumens eine geometrische Ausdehnung besitzt.

Die Vorrichtung zum Herstellen der Blechpakete lässt sich durch die Ausbildung des Verteilers (in dem ebenfalls keine beweglichen Teile angeordnet sind) mittels des additiven Verfahrens, insbesondere des 3D-Druckverfahrens, mit hoher Genauigkeit, beliebiger Kanalführung mit beliebigen Kanalquerschnitten und Anschlussgeometrien für den oder die Auftragsköpfe auf die mit den genannten Parametern erfolgende Applikation des Klebemediums einfach und optimiert abstimmen.

Vorteilhafte Ausgestaltungen der Erfindung sind in den abhängigen Ansprüchen angegeben.

Bei einer Integration der Klebemediumapplikation in den Stanzprozess ist vorteilhaft vorgesehen, dass der Auftragskopf synchron zum Arbeitshub der Stanzpresse bewegt wird.

Insbesondere wenn der Auftrag des Klebemediums dem Stanzprozess nachgelagert ist, besteht eine vorteilhafte Ausgestaltung darin, dass der Auftragskopf nicht synchron zum Arbeitshub der Stanzpresse bewegt wird.

Vorteilhaft wird das benötigte Volumen des Klebemediums am Auftragskopf durch Druckhöhe und Pulsdauer in Abhängigkeit von der Viskosität des Klebemediums und der Bewegungsenergie des Auftragskopfs (auch in Abstimmung auf die Ausbildung des Auftragskopfs) zur Verfügung gestellt.

Zu einer präzisen Funktion und Integration des Verfahrens in den Herstellungsprozess des Blechpakets tragen ferner die Maßnahmen bei, dass der Auftragskopf die Oberfläche der Blechisolation des Blechbandes oder der Blechlamelle bei der Abgabe des Klebemediums nicht berührt, wobei der Abstand zwischen Auftragskopf und Blechband oder der Blechlamelle höchstens 5 mm, vorzugsweise höchstens 1 mm, beträgt.

Für ein genau abgestimmtes Auftragen des Klebemediums zum Ausbilden einer möglichst optimalen Klebefläche bzw. Klebeverbindung zwischen den Blechlamellen ist des Weiteren vorteilhaft vorgesehen, dass die Oberfläche der Blechisolation der Blechlamelle während des Auftrags der Klebepunkte nur partiell benetzt wird.

Weitere vorteilhafte Maßnahmen zum Ausbilden der Klebeflächen bestehen darin, dass der Auftrag der Klebepunkte auf die Blechisolation des Blechbandes oder die Blechlamelle auf Vorhandensein und Größe einer partiellen Benetzung sensorisch überwacht wird.

Zu einer genauen Abstimmung der Klebefläche auf den Blechlamellen trägt ferner bei, dass das Volumen des jeweiligen Klebepunkts eingestellt wird.

Eine hohe Qualität der Ausbildung der Klebeflächen während des Herstellungsprozesses und der Klebeverbindung wird auch dadurch sichergestellt, dass das Volumen des jeweiligen Klebepunkts durch einen Regelkreis selbstständig reguliert wird.

Ein gleichmäßiger Auftrag des Klebemediums zum Optimieren der Klebeflächen wird ferner dadurch unterstützt, dass der Auftrag mehrerer Klebepunkte auf die Oberfläche des Blechbandes oder der Blechlamelle über zumindest einen Verteiler mit zumindest einer Zuführung für das Klebemedium und über den mindestens einen an den mindestens einen Verteiler angeschlossenen Auftragskopf erfolgt. An einem Verteiler können ein oder mehrere Auftragsköpfe angebracht sein, wobei z. B. jeder Auftragskopf nur einen Klebepunkt pro Bewegungsablauf applizieren kann. In alternativer Ausgestaltung können mit einem Auftragskopf auch mehrere Klebepunkte aufgetragen werden.

Eine Integration des Kleberauftrags in den Stanzprozess ergibt sich dadurch, dass sich die Auftragseinheit zum Auftrag des Klebepunkts innerhalb des Stanzprozesses befindet.

Eine vorteilhafte Applikation des Klebemediums besteht ferner darin, dass sich die Auftragseinheit zum Auftrag des Klebemediums außerhalb des Stanzprozesses befindet, insbesondere diesem nachgeordnet ist.

Eine vorteilhafte weitere Ausgestaltung des Verfahrens besteht darin, dass sich der Verteiler und der Auftragskopf zum Auftrag des Klebemediums innerhalb des Auslochstempels des Stanzwerkzeugs befindet-

Die Vorrichtung ist vorteilhaft dadurch ausgestaltet, dass der mindestens eine Verteiler für das Klebemedium aus einem metallischen Werkstoff besteht oder dass der mindestens eine Verteiler für das Klebemedium aus einem nicht metallischen Werkstoff, insbesondere einem Kunststoff, vorzugsweise aus einem duroplastischen Kunststoff, hergestellt ist.

Eine für den Aufbau und die Funktion besonders vorteilhafte Ausgestaltung der Vorrichtung besteht darin, dass der Auftragskopf keine beweglichen Bauteile, insbesondere keine angetriebenen Bauteile, enthält. Diese Ausbildung ergibt im Zusammenhang mit dem additiven Verfahren zur Herstellung des Verteilers einen gut auf die erforderliche Funktion abstimmbaren, weitgehend störungsfrei arbeitenden Aufbau des Auftragssystems.

Zu einer präzisen Funktionsweise und zuverlässigen Überwachung einer gleichmäßig hohen Qualität des Klebstoffauftrags trägt ferner bei, dass ein Sensor, insbesondere ein optischer Sensor, vorhanden ist, der das Vorhandensein und die Größe der partiellen Benetzung eines Blechbandes oder der Blechlamellen mit den Klebepunkten überwacht, wobei die Überwachung durch den Sensor beim Klebemediumauftrag erfolgt oder dem Klebemediumauftrag nachgelagert stattfindet. Dabei ist der Ausdruck "Sensor" im weiten Sinne zu verstehen, wobei der optische Sensor also auch z. B. ein Kamerasystem zur Bildverarbeitung für einen Soll-Ist-Vergleich sein kann.

Eine für die Funktion und den Aufbau der Vorrichtung vorteilhafte weitere Ausgestaltung besteht darin, dass das Volumen der Klebepunkte einstellbar ist, insbesondere selbständig durch einen Regelkreis mit einem Sensor zur Überwachung der partiellen Benetzung des Blechbandes oder der Blechlamellen mit den Klebepunkten.

Eine hohe Qualität des Auftrags und der Verteilung des Klebemediums wird auch dadurch unterstützt, dass der Abstand der Auftragsköpfe untereinander insbesondere höchstens 5 mm, vorzugsweise höchstens 3 mm, beträgt. Produktbezogen können auch größere Abstände in Frage kommen.

Die Erfindung wird nachfolgend anhand von Ausführungsbeispielen unter Bezugnahme auf die Zeichnungen näher erläutert. Es zeigen:
- Fig. 1: eine schematische Darstellung einer Vorrichtung zum Herstellen eines Blechpakets aus einem von einem Coil abgewickelten Blechband in einem Stanzprozess mit einer Stanzpresse und einer Vorrichtung zum Paketieren von Blechlamellen zu dem Blechpaket,
- Fig. 2: ein aus einer Anzahl von Blechlamellen gebildetes Blechpaket in perspektivischer Darstellung,
- Fig. 3: einen Abschnitt eines Blechbandes bestehend aus einem magnetischen Kernmaterial und beidseitig aufgebrachten Isolationsschichten, auf das ein Klebepunkt aufgetragen ist, in einer Schnittdarstellung,
- Fig. 4: eine vereinfachte Darstellung eines Ausführungsbeispiels eines im Stanzprozess angeordneten Stanzwerkzeugs, in dem ein Blechband zu Blechlamellen und einem Blechpaket schrittweise verarbeitet wird, bestehend aus Bereichen zur Herstellung der Innenkonturen der Blechlamellen, einem Auslochstempel, einer Auslochmatrize und einer Paketbremse in einer seitlichen Ansicht,
- Fig. 5: eine schematische Darstellung einer erfindungsgemäß in den Stanzprozess integrierten Auftragseinheit umfassend ein Gestell, einen Verteiler mit einer Zuführung für das Klebemedium, mehrere Auftragsköpfe und einen Sensor zur Überwachung des Auftrags der Klebepunkte auf das Blechband,
- Fig. 6: eine erfindungsgemäße dem Stanzprozess nachgelagerte Auftragseinheit umfassend ein Gestell, einen Verteiler mit einer Zuführung für das Klebemedium und mehrere Auftragsköpfe zum Auftrag der Klebepunkte auf die Blechlamelle,
- Fig. 7: einen erfindungsgemäß integrierten Verteiler mit einer Zuführung für das Klebemedium und mehreren Auftragsköpfen zum Auftrag der Klebepunkte auf die Blechlamelle in einem Auslochstempel des Stanzwerkzeugs und
- Fig. 8: ein Ausführungsbeispiel für einen Verteiler in perspektivischer gläserne Ansicht, hergestellt mit einem 3D-Druckverfahren.

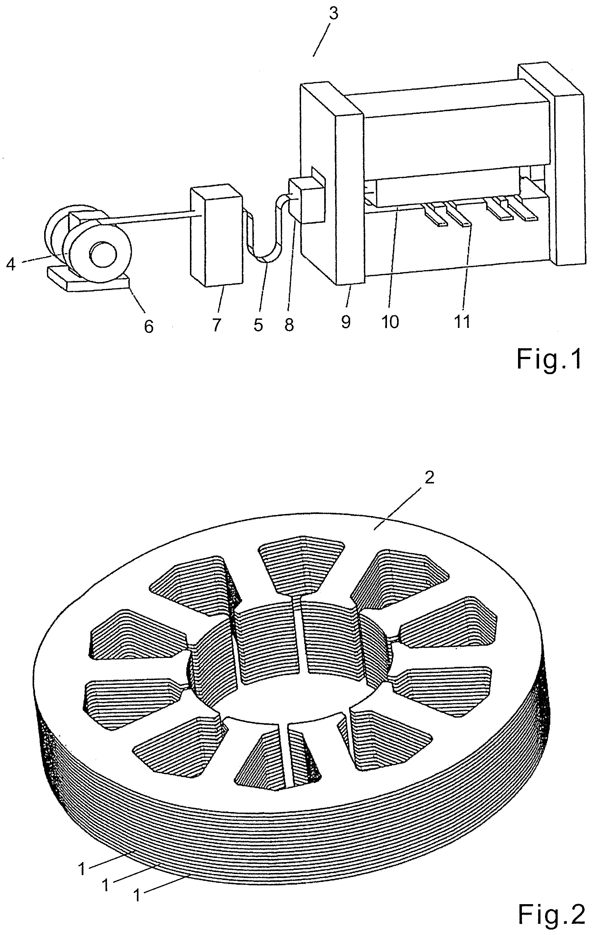

Fig. 1 zeigt schematisch eine Vorrichtung zum Herstellen von Blechpaketen 2 aus Blechlamellen 1 in großer Stückzahl innerhalb eines Stanzprozesses 3. Ein Blechpaket 2 aus einer Vielzahl von Blechlamellen 1 ist beispielhaft in Fig. 2 dargestellt.

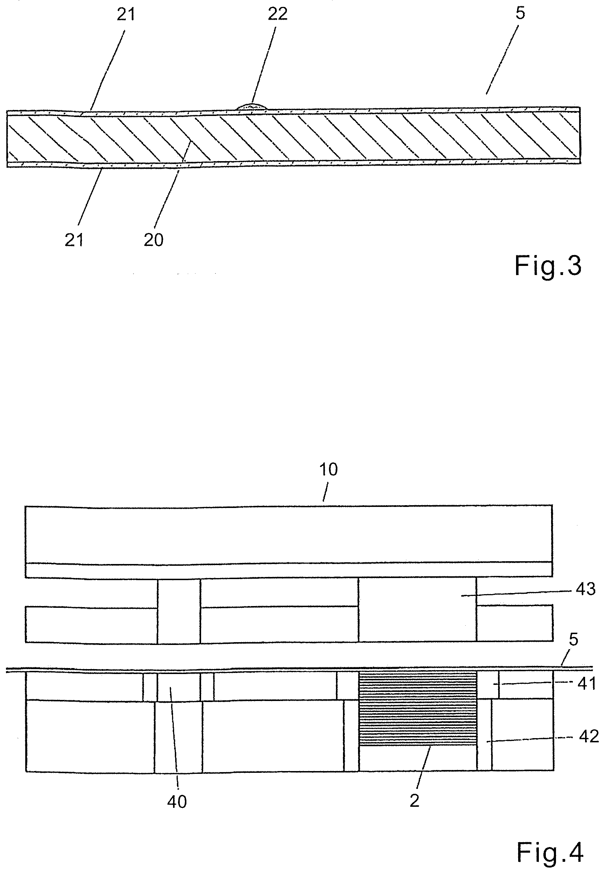

Zur Herstellung der Blechpakete 2 wird ein Blechband 5 mithilfe einer Haspel 6 von einem Coil 4 abgewickelt, optional einer Richteinheit 7 zugeführt und mittels eines Vorschubsystems 8 schrittweise in einen Arbeitsraum einer Stanzpresse 9 sowie einem Stanzwerkzeug 10 zugeführt. Wie Fig. 3 ausschnittsweise zeigt, besteht das Blechband 5 aus einem (magnetischen) Kernmaterial 20 mit auf dessen beiden Seiten aufgebrachten Isolationsschichten 21.

Innerhalb des Stanzwerkzeugs 10 werden zunächst Positionierlöcher in das Blechband 5 gestanzt, die eine exakte Schrittweite für das schrittweise Vorschieben des Blechbandes 5 innerhalb des Stanzwerkzeugs 10 sicherstellen. Anschließend werden in dem Stanzwerkzeug 10 in den Bereichen 40 zur Herstellung der Innenkonturen schrittweise die Innenkonturen der Blechlamelle 1 in das Blechband 5 gestanzt. Wenn alle vorzustanzenden Innenkonturen der Blechlamelle 1 in das Blechband 5 gestanzt sind, wird die Blechlamelle 1 mit einem Auslochstempel 43 aus dem Blechband 5 ausgestanzt und einer Auslochmatrize 41 mit einer darunter liegenden Paketbremse 42 übergeben (vgl. Fig. 4).

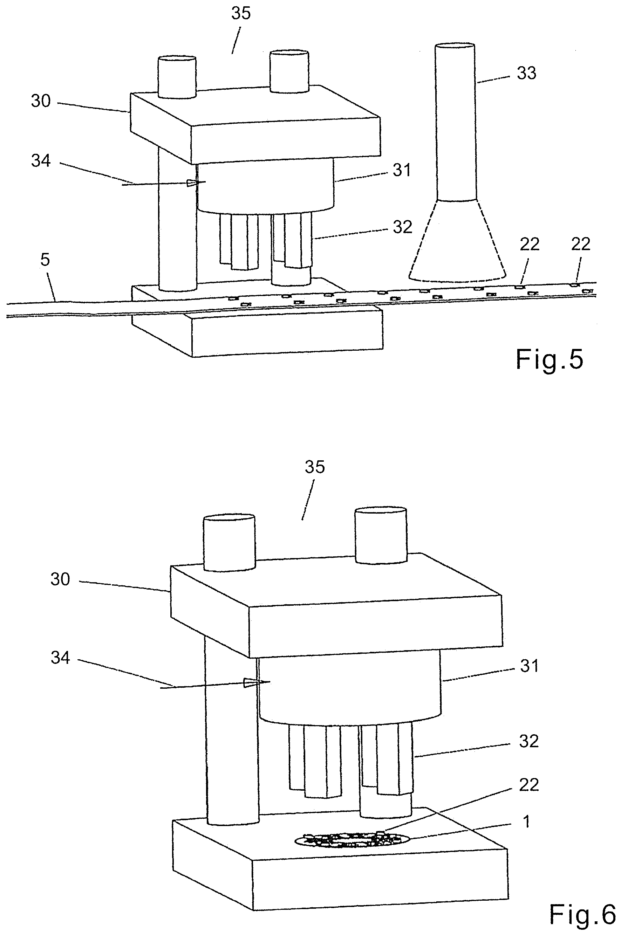

Fig. 5 zeigt ein Ausführungsbeispiel der Erfindung, bei dem sich eine Auftragseinheit 35 für ein Klebemedium zum Verbinden der aufeinandergestapelten Blechlamellen 1 in dem Arbeitsraum der Stanzpresse 9 zwischen dem Vorschubsystem 8 und dem Stanzwerkzeug 10 befindet. Das Blechband 5, dessen Bandbreite und Banddicke auf die Außenabmessung der Blechlamellen 1 abgestimmt sind, wird von dem Vorschubsystem 8 schrittweise dem Stanzwerkzeug 10 zugeführt, wobei die Schrittweite an den Außendurchmesser der Blechlamelle 1 angepasst ist. Dabei durchläuft das Blechband 5 schrittweise auch die Auftragseinheit 35. Die Auftragseinheit 35 ist im Arbeitsraum der Stanzpresse 9 so positioniert, dass lagerichtig Klebepunkte 22 auf die Isolationsschicht 21 des Blechbandes 5 aufgebracht werden können (vgl. Fig. 3).

Die Auftragseinheit 35 besteht aus einem Gestell 30, in welchem ein Verteiler 31 befestigt ist. An dem Verteiler 31 wiederum sind Auftragsköpfe 32 befestigt und Anzahl und Position derselben sind so gewählt und angeordnet, dass positionsgenau Klebepunkte 22 auf das Blechband aufgetragen werden können, solange das Blechband durch das Vorschubsystem nicht bewegt wird.

Für den Auftrag der Klebepunkte 22 auf das Blechband 5 wird aus einem von der Auftragseinheit 35 beabstandeten separaten (hier nicht gezeigten, üblicherweise in einem Pneumatik- und Fluidikteil eines Steuerschranks befindlichen) Klebstoffbehälter mittels einer Dosierpumpe bzw. eines Druckluftventils (das im Klebstoffbehälter einen Druck erzeugt) ein Klebemedium über eine Zuführung für das Klebemedium 34 dem Verteiler 31 und den daran befestigten Auftragsköpfen 32 pulsierend zugeführt. Eine Pulsfrequenz zur Zuführung des Klebemediums ist mit einer Arbeitsfrequenz der Stanzpresse 9 synchronisiert. Die Pulsdauer und der Druck sind so eingestellt, dass die Klebepunkte 22 auf dem Blechband 5 eine definierte Größe erreichen. Der Verteiler 31 besitzt ein Kanalsystem, das das Klebemedium gleichmäßig an die Auftragsköpfe 32 verteilt. Eine Platte des Gestells 30, an welcher der Verteiler 31 mit den Auftragsköpfen 32 befestigt ist, lässt sich in (bezüglich der Schwerkraftrichtung bzw. geodätisch) vertikaler Richtung ab- und aufwärts bewegen. Die vertikale Bewegung kann dabei synchron oder nicht synchron zum Arbeitshub der Stanzpresse 9 erfolgen.

Steht das Klebemedium am unteren Ende der Auftragsköpfe 32 zur Verfügung, werden der Verteiler 31 und die Auftragsköpfe 32 im Gestell 30 soweit vertikal in Richtung Blechband 5 bewegt, dass die Auftragsköpfe 32 das Blechband 5 nicht berühren. Dabei beträgt der Abstand zwischen den Auftragsköpfen 32 und dem Blechband 5 höchstens 5 mm, vorzugsweise höchstens 1 mm. Unterstützt durch die Bewegungsenergie des Verteilers 31 und der Auftragsköpfe 32, die Schwerkraft des Klebemediums am unteren Ende der Auftragsköpfe 32 und gegebenenfalls auch eine wirkende Adhäsionskraft des Klebemediums am Blechband 5 wird das Klebemedium in Form von Klebepunkten 22 auf die Oberseite des Blechbandes 5 übertragen. Wenn die Klebepunkte 22 auf das Blechband 5 übertragen sind, wird der Verteiler 31 mit den Auftragsköpfen 32 wieder vertikal im Gestell 30 nach oben bewegt und nach Abschluss der Stanzoperation im Stanzwerkzeug 10 das Blechband 5 durch das Vorschubsystem 8 um einen Schritt weiterbewegt.

Der Klebepunktauftrag wird solange wiederholt, bis die erforderliche Anzahl der Blechlamellen 1 mit Klebepunkten 22 zur Herstellung des Blechpakets 2 erreicht ist. Dann wird zur Pakettrennung der Auftrag der Klebepunkte 22 auf das Blechband 5 einmalig unterbrochen, indem der Impuls für die Zuführung des Klebemediums 34 in den Verteiler 31 und die Auftragsköpfe 32 einmalig ausgesetzt wird. Die Pakettrennung kann dadurch unterstützt werden, dass die vertikale Bewegung des Verteilers 31 und der Auftragsköpfe 32 gleichzeitig mit dem Aussetzen des Impulses zur Bereitstellung des Klebemediums unterbleibt.

Die Überwachung eines erfolgreichen Auftrags der Klebepunkte 22, insbesondere des Vorhandenseins und der Größe bzw. des Volumens der Klebepunkte 22 auf dem Blechband 5, erfolgt mit einem oder mehreren der Auftragseinheit 35 nachgelagerten Sensoren 33. In einer besonderen Ausführung wird die Größe der Klebepunkte 22 durch die Pulsdauer und den Druck zur Bereitstellung des Klebemediums über die Sensoren 33 zur Überwachung der Größe der Klebepunkte 22 geregelt.

Nachdem die Klebepunkte 22 auf das Blechband 5 aufgetragen sind, wird das Blechband 5 schrittweise durch das Stanzwerkzeug 10 gefördert und die Innenkonturen der Blechlamellen 1 werden gemäß Fig. 4 in den Bereichen 40 zur Herstellung der Innenkonturen in das Blechband 5 gestanzt. In der Auslocheinheit des Stanzwerkzeugs 10 befindet sich der Auslochstempel 43, der bei jedem Arbeitshub der Stanzpresse 9 eine Blechlamelle 1 aus dem Blechband 5 ausstanzt und an die Auslochmatrize 41 übergibt. Berührt die ausgestanzte Blechlamelle 1 die darunterliegende Blechlamelle 1 so werden die Klebepunkte 22 zwischen den beiden benachbarten Blechlamellen 1 zusammengepresst und dadurch auf den Oberflächen der beiden benachbarten Blechlamellen 1 flächig verteilt.

Bei jedem Arbeitshub der Stanzpresse 9 wird eine weitere Blechlamelle 1 durch den Auslochstempel 43 in die Auslochmatrize 41 gedrückt und der darunter befindliche Stapel der Blechlamellen 1 um den Weg der Blechdicke nach unten bewegt. Um Zeit für die Aushärtung der flächig verteilten Klebepunkte 22 zwischen den Blechlamellen 1 zur Bildung der Blechpakete 2 zu generieren, befindet sich unterhalb der Auslochmatrize 41 die Paketbremse 42, die durch eine radiale Vorspannkraft eine axiale Haltekraft in Form von Reibung für die Blechpakete 2 innerhalb der Matrize 41 und der Paketbremse 42 erzeugt. Erreicht ein fertiggestelltes Blechpaket 2 das untere Ende der Paketbremse 42, wird es dort durch Schwerkraft oder mittels eines Liftsystems an ein Fördersystem 11 übergeben, das die fertiggestellten Blechpakete 2 aus der Stanzpresse 9 fördert.

Bei einem in Fig. 6 gezeigten weiteren Ausführungsbeispiel der Erfindung ist eine Auftragseinheit 35 dem Stanzprozess 3 nachgelagert angeordnet. Diese Ausführung erlaubt, dass zwischen dem Stanzprozess 3 und dem Auftrag der Klebepunkte 22 auf die Isolationsschicht 21 der Blechlamellen weitere Bearbeitungsschritte an den Blechlamellen 1, wie z. B. eine thermische Behandlung, durchgeführt werden können, die eine zuvor erzeugte Klebeverbindung zwischen den Blechlamellen 1 zum Blechpaket 2 schwächen oder zerstören können.

Die Auftragseinheit 35 weist wiederum ein Gestell 30 auf, in welchem ein Verteiler 31 befestigt ist. An dem Verteiler 31 mit einer Zuführung für das Klebemedium 34 sind die Auftragsköpfe 32 befestigt, deren Anzahl und Position so gewählt und angeordnet sind, dass positionsgenau Klebepunkte 22 auf die Blechlamelle 1 aufgetragen werden können.

Zunächst wird eine Blechlamelle 1 manuell oder automatisiert positionsgenau in die Auftragseinheit 35 eingelegt. Für den Auftrag der Klebepunkte 22 auf die Blechlamelle 1 wird ein Klebemedium über die Zuführung für das Klebemedium 34 im Verteiler 31 und die daran befestigten Auftragsköpfe 32 mit einem Impuls zugeführt. Die Pulsdauer und der Druck sind so eingestellt, dass die Klebepunkte 22 auf der Blechlamelle 1 eine definierte, vorgegebene Größe bzw. ein vorgegebenes Volumen erreichen. Der Verteiler 31 besitzt ein Kanalsystem, das das Klebemedium gleichmäßig an die Auftragsköpfe 32 verteilt. Eine Platte des Gestells 30, an welcher der Verteiler 31 mit den Auftragsköpfen 32 befestigt ist, lässt sich in vertikaler Richtung ab- und aufwärtsbewegen. Die vertikale Bewegung kann dabei manuell oder automatisch angetrieben erfolgen. Steht das Klebemedium am unteren Ende der Auftragsköpfe 32 zur Verfügung, werden der Verteiler 31 und die Auftragsköpfe 32 in dem Gestell 30 manuell oder automatisch angetrieben soweit vertikal in Richtung Blechlamelle 1 bewegt, dass die Auftragsköpfe 32 die Blechlamelle 1 nicht berühren. Dabei beträgt der Abstand zwischen den Auftragsköpfen 32 und der Blechlamelle 1 höchstens 5 mm, vorzugsweise höchstens 1 mm. Unterstützt durch die Bewegungsenergie des Verteilers 31 und der Auftragsköpfe 32, die Schwerkraft des Klebemediums am unteren Ende der Auftragsköpfe 32 und die gegebenenfalls vorhandene Adhäsionskraft des Klebemediums an der Blechlamelle 1 wird das Klebemedium in Form von Klebepunkten 22 auf die Oberseite der Blechlamelle 1 übertragen. Wenn die Klebepunkte 22 auf die Blechlamelle übertragen sind, wird der Verteiler 31 mit den Auftragsköpfen 32 wieder vertikal in dem Gestell nach oben in seine Ausgangsstellung bewegt.

Anschließend wird die Blechlamelle 1 manuell oder automatisiert der Auftragseinheit 35 entnommen und einer Stapeleinheit zugeführt, in der die Blechlamellen 1 positionsgenau aufeinandergeschichtet und gepresst werden. Durch das Aufeinanderpressen benachbarter Blechlamellen 1 verteilen sich die Klebepunkte 22 flächig zwischen den Blechlamellen. Unter Ausüben von Druck und Zeit härten die Klebepunkte bzw. Klebeflächen aus und benachbarte Blechlamellen 1 werden zu Blechpaketen 2 verbunden. Fertiggestellte Blechpakete 2 werden der Stapeleinheit manuell oder automatisiert entnommen.

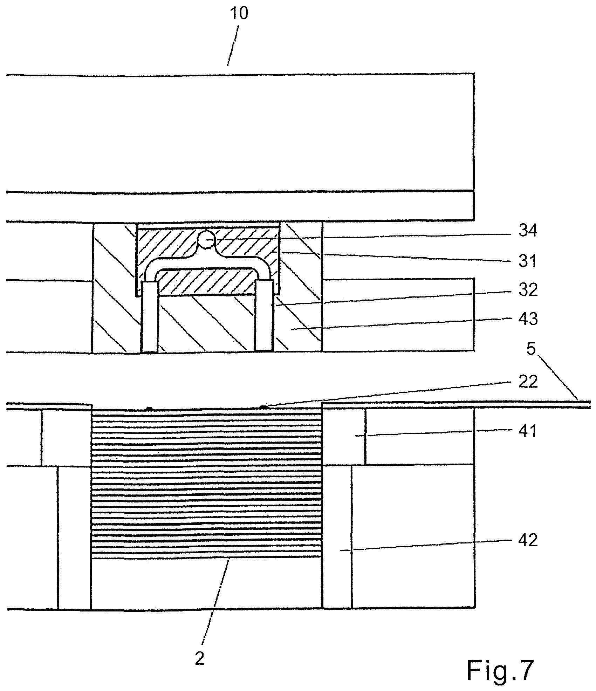

Bei einem in Fig. 7 gezeigten dritten Ausführungsbeispiel der Erfindung sind der Verteiler 31 und die Auftragsköpfe 32 in dem Auslochstempel 43 innerhalb des Stanzwerkzeugs 10 integriert. Bei dieser Ausführung ergeben sich vorteilhaft besonders kurze Verteilungswege für das Klebemedium.

Für den Auftrag der Klebepunkte 22 auf das Blechband 5 wird auch gemäß diesem Ausführungsbeispiel ein Klebemedium über eine Zuführung für das Klebemedium 34 dem Verteiler 31 und die daran befestigten Auftragsköpfe 32 pulsierend zugeführt.

Die Pulsfrequenz ist mit der Arbeitsfrequenz der Stanzpresse 9 synchronisiert. Die Pulsdauer und der Druck sind so eingestellt, dass die Klebepunkte 22 auf dem Blechband 5 eine definierte Größe erreichen. Der Verteiler 31 besitzt ein Kanalsystem, das das Klebemedium gleichmäßig an die Auftragsköpfe 32 verteilt. Das zur Verfügung stellen des Klebemediums an den unteren Enden der Auftragsköpfe 32 beginnt frühestens dann, wenn der Auslochstempel 43 bei der Aufwärtsbewegung des Pressenstößels nach oben bewegt wird und zur Oberfläche der zuvor ausgestanzten Blechlamelle 1 ein Abstand von mindestens 1 mm erreicht hat. Die zur Verfügung-stellung des Klebemediums am unteren Ende der Auftragsköpfe 32 ist spätestens dann abgeschlossen, wenn bei der Abwärtsbewegung des Auslochstempels 43 durch den Pressenstößel der Abstand zwischen Auslochstempel 43 und Blechband 5 noch mindestens 1 mm beträgt. Wenn der Auslochstempel 43 bei der Abwärtsbewegung das Blechband 5 berührt und der Auslochvorgang der Blechlamelle 1 aus dem Blechband 5 beginnt, wird das Klebemedium in Form von Klebepunkten 22 von den Auftragsköpfen 32 auf das Blechband übertragen. Die Auftragsköpfe 32 berühren während des Auftrags des Klebemediums auf das Blechband 5 das Blechband 5 nicht, wobei der Abstand zwischen den Auftragsköpfen 32 und dem Blechband 5 höchstens 5 mm, vorzugsweise höchstens 1 mm beträgt. Unterstützt durch die Bewegungsenergie des Verteilers 31 und der Auftragsköpfe 32 im Auslochstempel 43, die Schwerkraft des Klebemediums am unteren Ende der Auftragsköpfe 32 und unter Wirkung einer gegebenenfalls vorhandenen Adhäsionskraft des Klebemediums am Blechband 5 wird das Klebemedium in Form von Klebepunkten 22 auf die Oberseite des Blechbandes 5 übertragen. Wenn die Klebepunkte 22 auf das Blechband 5 übertragen sind, der Auslochvorgang der Blechlamelle 1 aus dem Blechband abgeschlossen ist und der Auslochstempel 43 bei seiner Aufwärtsbewegung das Blechband 5 sicher verlassen hat, wird das Blechband 5 durch das Vorschubsystem 8 um einen Schritt weiterbewegt.

Der Klebepunktauftrag wird solange wiederholt, bis die erforderliche Anzahl der Blechlamellen 1 mit Klebepunkten 22 zur Herstellung des Blechpakets 2 erreicht ist.

Dann wird zur Pakettrennung der Auftrag der Klebepunkte 22 auf das Blechband 5 einmalig unterbrochen, indem der Impuls für die Zuführung des Klebemediums 34 in den Verteiler 31 und die Auftragsköpfe 32 einmalig ausgesetzt wird. Die Pakettrennung kann dadurch unterstützt werden, dass der Verteiler 31 und die Auftragsköpfe 32 innerhalb des Auslochstempels 43 einmalig um mindestens 0,5 mm gleichzeitig mit dem Aussetzen des Impulses zur Bereitstellung des Klebemediums unter automatischem Antrieb angehoben werden.

Bei jedem Arbeitshub der Stanzpresse 9 wird eine Blechlamelle aus dem Blechband 5 ausgestanzt und an die Auslochmatrize übergeben. Berührt die ausgestanzte Blechlamelle 1 die darunterliegende Blechlamelle 1, so werden die Klebepunkte 22 zwischen den beiden benachbarten Blechlamellen 1 zusammengepresst und dadurch auf den Oberflächen der beiden benachbarten Blechlamellen 1 flächig verteilt.

Bei jedem Arbeitshub der Stanzpresse 9 wird eine weitere Blechlamelle 1 durch den Auslochstempel 43 in die Auslochmatrize 41 gedrückt und der darunter befindliche Stapel der Blechlamellen 1 um den Wert der Blechdicke nach unten bewegt. Um Zeit für die Aushärtung der Klebepunkte zwischen den Blechlamellen 1 zur Bildung der Blechpakete 2 zu generieren, befindet sich unterhalb der Auslochmatrize 41 die Paketbremse 42, die durch eine radiale Vorspannkraft eine axiale Haltekraft in Form von Reibung für die Blechpakete 2 innerhalb der Matrize 41 und der Paketbremse 42 erzeugt. Erreicht ein fertiggestelltes Blechpaket 2 das untere Ende der Paketbremse 42, wird es dort durch Schwerkraft oder ein Liftsystem an ein Fördersystem 11 übergeben, das die fertiggestellten Blechpakete 2 aus der Stanzpresse 9 fördert.

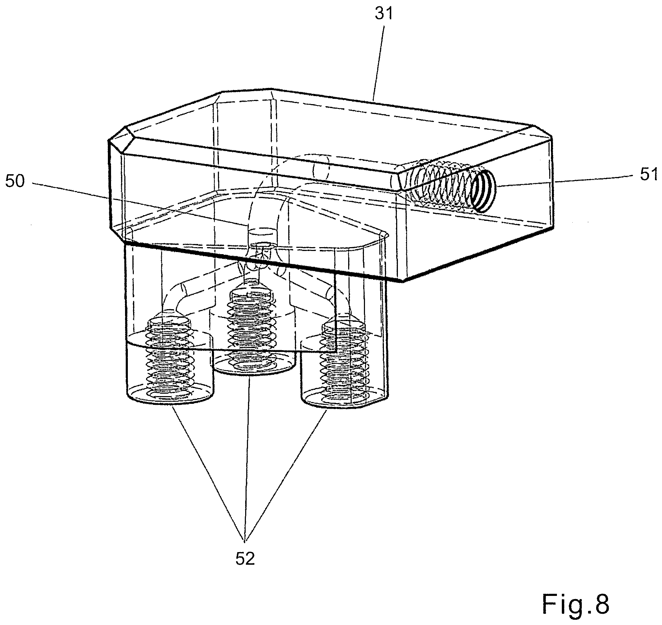

Figur 8 zeigt beispielhaft einen Verteiler 31, hergestellt mit einem 3D-Druckverfahren, mit innenliegendem Verteilerkanal 50, der das Klebemedium von der Zuführung des Klebemediums 34 über die Schnittstelle 51 bzw. Anschlussstelle in den Verteiler 31 einleitet. Das Klebemedium wird im Verteiler 31 über das Kanalsystem 50 an die vorliegend drei weiteren Schnittstellen 52 geleitet und dort an die Auftragsköpfe 32 übergeben. Alternativ können auch mehr oder weniger als drei weitere Schnittstellen vorhanden sein. Die besondere Form des Verteilerkanals 50 ist vorteilhaft mit einem 3D-Druckverfahren aus einem duroplastischen Kunststoff hergestellt.

## Patentansprüche

1. Verfahren zum Herstellen von Blechpaketen (2) aus Blechlamellen (1), bei dem ein Klebemedium als mindestens ein Klebepunkt (22) auf die Oberseite der Oberfläche einer Blechisolation (21) eines horizontal bezüglich der Schwerkraftrichtung geführten Blechbandes (5) mittels einer Auftragseinheit (35) über einen Auftragskopf (32) aufgetragen wird, wobei
die Übergabe des Klebemediums als mindestens ein Klebepunkt (22) auf die Oberfläche der Blechisolation (21) des Blechbandes (5) oder einer daraus geschnittenen Blechlamelle (1) ohne bewegliche Bauteile in dem Auftragskopf (32) erfolgt und wobei zur Übertragung des Klebemediums in Form des mindestens einen Klebepunkts (22) der Auftragskopf (32) senkrecht relativ zur Oberfläche des Blechbandes (5) bewegt wird,
wobei die Übergabe des Klebemediums als Klebepunkt (22) auf die Blechisolation (21) des Blechbandes (5) oder der Blechlamelle (1) durch die Bewegungsenergie eines Verteilers (31) der Auftragseinheit (35) und des Auftragskopfs (32), und die Schwerkraft des Klebemediums mit oder ohne Nutzung der Adhäsionskraft des Klebepunkts (22) am Blechband (5) unterstützt wird.

2. Verfahren nach Anspruch 1,
**dadurch gekennzeichnet,**
**dass** der Auftragskopf (32) synchron zum Arbeitshub der Stanzpresse (9) bewegt wird.

3. Verfahren nach Anspruch 1,
**dadurch gekennzeichnet,**
**dass** der Auftragskopf (32) nicht synchron zum Arbeitshub der Stanzpresse (9) bewegt wird.

4. Verfahren nach einem der vorhergehenden Ansprüche,
**dadurch gekennzeichnet,**
**dass** der Auftragskopf (32) die Oberfläche der Blechisolation (21) des Blechbandes (5) oder der Blechlamelle (1) bei der Abgabe des Klebemediums nicht berührt, wobei der Abstand zwischen Auftragskopf (32) und Blechband (5) oder der Blechlamelle (1) höchstens 5 mm beträgt, vorzugsweise höchstens 1 mm beträgt.

5. Verfahren nach einem der vorhergehenden Ansprüche,
**dadurch gekennzeichnet,**
**dass** die Oberfläche der Blechisolation (21) der Blechlamelle (1) während des Auftrags der Klebepunkte (22) nur partiell benetzt wird.

6. Verfahren nach einem der vorhergehenden Ansprüche,
**dadurch gekennzeichnet,**
**dass** der Auftrag der Klebepunkte (22) auf die Blechisolation (21) des Blechbandes (5) oder die Blechlamelle (1) auf Vorhandensein und Größe einer partiellen Benetzung sensorisch (33) überwacht wird.

7. Verfahren nach einem der vorhergehenden Ansprüche,
**dadurch gekennzeichnet,**
**dass** das Volumen des jeweiligen Klebepunkts (22) eingestellt wird.

8. Verfahren nach einem der vorhergehenden Ansprüche,
**dadurch gekennzeichnet,**
**dass** das Volumen des jeweiligen Klebepunkts (22) durch einen Regelkreis selbstständig reguliert wird.

9. Verfahren nach einem der vorhergehenden Ansprüche,
**dadurch gekennzeichnet,**
**dass** der Auftrag mehrerer Klebepunkte (22) auf die Oberfläche des Blechbandes (5) oder der Blechlamelle (1) über den Verteiler (31) mit zumindest einer Zuführung für das Klebemedium (34) und über den an den Verteiler (31) angeschlossenen Auftragskopf (32) erfolgt.

10. Verfahren nach einem der vorhergehenden Ansprüche,
**dadurch gekennzeichnet,**
**dass** sich die Auftragseinheit (35) zum Auftrag des Klebepunkts (22) innerhalb des Stanzprozesses (3) befindet.

11. Verfahren nach einem der Ansprüche 1 bis 10,
**dadurch gekennzeichnet,**
**dass** sich die Auftragseinheit (35) zum Auftrag des Klebemediums (22) außerhalb des Stanzprozesses (3) befindet, insbesondere diesem nachgeordnet ist.

12. Verfahren nach einem der Ansprüche 1 bis 10,
**dadurch gekennzeichnet,**
**dass** der Auftrag des Klebemediums mittels einer Ausbildung erfolgt, bei der sich der Verteiler (31) und der Auftragskopf (32) innerhalb des Auslochstempels (43) des Stanzwerkzeugs (10) befinden.

13. Vorrichtung zur Durchführung des Verfahrens nach Anspruch 1 mit einer Auftragseinheit (35) zum Herstellen von Blechpaketen (2) aus Blechlamellen (1), die einen Auftragskopf (32), zumindest einen Verteiler (31) für das Klebemedium mit zumindest einer Zuführung für das Klebemedium (34) und ein Gestell (30) zur Aufnahme des/der Verteiler (31) und des mindestens einen Auftragskopfes (32) aufweist,
**dadurch gekennzeichnet,**
**dass** der Verteiler (31) mit einem additiven Verfahren, insbesondere einem 3D-Druckverfahren, hergestellt ist.

14. Vorrichtung nach Anspruch 13,
**dadurch gekennzeichnet,**
**dass** der mindestens eine Verteiler (31) für das Klebemedium aus einem metallischen Werkstoff besteht.

15. Vorrichtung nach Anspruch 14,
**dadurch gekennzeichnet,**
**dass** der mindestens eine Verteiler (31) für das Klebemedium aus einem nicht metallischen Werkstoff, insbesondere einem Kunststoff, vorzugsweise aus einem duroplastischen Kunststoff, hergestellt ist.

16. Vorrichtung nach Anspruch 13 bis 15,
**dadurch gekennzeichnet,**
**dass** der Auftragskopf (32) keine beweglichen Bauteile, insbesondere keine angetriebenen Bauteile, enthält.

17. Vorrichtung nach einem der Ansprüche 14 bis 16,
**dadurch gekennzeichnet,**
**dass** ein Sensor (33), insbesondere ein optischer Sensor (33), vorhanden ist, der das Vorhandensein und die Größe der partiellen Benetzung eines Blechbandes (5) oder der Blechlamellen (1) mit den Klebepunkten (22) überwacht, wobei die Überwachung durch den Sensor (33) beim Klebemediumauftrag erfolgt oder dem Klebemediumauftrag nachgelagert stattfindet.

18. Vorrichtung nach einem der Ansprüche 13 bis 17,
**dadurch gekennzeichnet,**
**dass** das Volumen der Klebepunkte (22) einstellbar ist, insbesondere selbständig durch einen Regelkreis mit einem Sensor (33) zur Überwachung der partiellen Benetzung des Blechbandes (5) oder der Blechlamellen (1) mit den Klebepunkten (22).

19. Vorrichtung nach einem der Ansprüche 13 bis 18 mit mehreren Auftragsköpfen,
**dadurch gekennzeichnet,**
**dass** der Abstand der Auftragsköpfe (32) untereinander höchstens 5 mm, vorzugsweise höchstens 3 mm, beträgt.

## Claims

1. Method for producing laminated cores (2) from laminations (1), in which an adhesive medium is applied as at least one adhesive point (22) to the upper side of the surface of a sheet metal insulation (21) of a sheet metal strip (5) guided horizontally with respect to the direction of gravity by means of an application unit (35) via an application head (32), wherein
the adhesive medium is transferred as at least one adhesive point (22) to the surface of the sheet metal insulation (21) of the sheet metal strip (5) or a lamination (1) cut from the strip without movable components in the application head (32), and wherein the application head (32) is moved perpendicularly relative to the surface of the sheet metal strip (5) in order to transfer the adhesive medium in the form of the at least one adhesive point (22),
wherein the transfer of the adhesive medium as an adhesive point (22) to the sheet metal insulation (21) of the sheet metal strip (5) or of the lamination (1) is supported by the kinetic energy of a distributor (31) of the application unit (35) and the application head (32), and the gravitational force of the adhesive medium with or without using the adhesive force of the adhesive point (22) on the sheet metal strip (5).

2. Method according to claim 1,
**characterized in that**
the application head (32) is moved synchronously with the working stroke of the punching press (9).

3. Method according to claim 1,
**characterized in that**
the application head (32) is not moved synchronously with the working stroke of the punching press (9).

4. Method according to any of the preceding claims,
**characterized in that**
the application head (32) does not touch the surface of the sheet metal insulation (21) of the sheet metal strip (5) or the lamination (1) when dispensing the adhesive medium, the distance between the application head (32) and the sheet metal strip (5) or the lamination (1) being at most 5 mm, preferably at most 1 mm.

5. Method according to any of the preceding claims,
**characterized in that**
the surface of the sheet metal insulation (21) of the lamination (1) is only partially wetted during the application of the adhesive points (22).

6. Method according to any of the preceding claims,
**characterized in that**
the application of the adhesive points (22) to the sheet metal insulation (21) of the sheet metal strip (5) or the lamination (1) is monitored by sensors (33) for the presence and size of partial wetting.

7. Method according to any of the preceding claims,
**characterized in that**
the volume of the relevant adhesive point (22) is adjusted.

8. Method according to any of the preceding claims,
**characterized in that**
the volume of the relevant adhesive point (22) is regulated independently by a control circuit.

9. Method according to any of the preceding claims,
**characterized in that**
the application of several adhesive points (22) to the surface of the sheet metal strip (5) or the lamination (1) takes place via the distributor (31) with at least one feed for the adhesive medium (34) and via the application head (32) connected to the distributor (31).

10. Method according to any of the preceding claims,
**characterized in that**
the application unit (35) for applying the adhesive point (22) is located within the punching process (3).

11. Method according to any of claims 1 to 10,
**characterized in that**
the application unit (35) for applying the adhesive medium (22) is located outside the punching process (3), in particular downstream thereof.

12. Method according to any of claims 1 to 10,
**characterized in that**
the adhesive medium is applied by means of an embodiment in which the distributor (31) and the application head (32) are located inside the punching stamp (43) of the punching tool (10).

13. Device for carrying out the method according to claim 1, comprising an application unit (35) for producing laminated cores (2) from laminations (1), which has an application head (32), at least one distributor (31) for the adhesive medium with at least one feed for the adhesive medium (34) and a frame (30) for receiving the distributor(s) (31) and the at least one application head (32),
**characterized in that**
the distributor (31) is produced using an additive method, in particular a 3D printing method.

14. Device according to claim 13,
**characterized in that**
the at least one distributor (31) for the adhesive medium is made of a metal material.

15. Device according to claim 14,
**characterized in that**
the at least one distributor (31) for the adhesive medium is made of a non-metal material, in particular a plastics material, preferably a thermosetting plastics material.

16. Device according to claim 13 to 15,
**characterized in that**
the application head (32) does not contain any movable components, in particular no driven components.

17. Device according to any of claims 14 to 16,
**characterized in that**
a sensor (33), in particular an optical sensor (33), is present which monitors the presence and the size of the partial wetting of a sheet metal strip (5) or the lamination (1) with the adhesive points (22), the monitoring by the sensor (33) taking place during the application of the adhesive medium or taking place downstream of the application of the adhesive medium.

18. Device according to any of claims 13 to 17,
**characterized in that**
the volume of the adhesive points (22) is adjustable, in particular independently by a control circuit with a sensor (33) for monitoring the partial wetting of the sheet metal strip (5) or the lamination (1) with the adhesive points (22).

19. Device according to any of claims 13 to 18 comprising several application heads,
**characterized in that**
the distance between the application heads (32) is at most 5 mm, preferably at most 3 mm.

## Revendications

1. Procédé de fabrication de paquets de tôles (2) à partir de lamelles de tôle (1), dans lequel un milieu adhésif est appliqué en tant qu'au moins un point adhésif (22) sur la face supérieure de la surface d'une isolation de tôle (21) d'une bande de tôle (5) guidée horizontalement par rapport au sens de la force de gravité au moyen d'une unité d'application (35) par l'intermédiaire d'une tête d'application (32), dans lequel
le transfert du milieu adhésif sous forme d'au moins un point adhésif (22) sur la surface de l'isolation de tôle (21) de la bande de tôle (5) ou d'une lamelle de tôle (1) découpée dans celle-ci est effectué sans composants mobiles dans la tête d'application (32) et dans lequel, pour le transfert du milieu adhésif sous forme de l'au moins un point adhésif (22), la tête d'application (32) est déplacée verticalement par rapport à la surface de la bande de tôle (5),
dans lequel le transfert du milieu adhésif sous forme de point adhésif (22) sur l'isolation de tôle (21) de la bande de tôle (5) ou de la lamelle de tôle (1) est assisté par l'énergie cinétique d'un distributeur (31) de l'unité d'application (35) et de la tête d'application (32) et par la force de gravité du milieu adhésif avec ou sans utilisation de la force d'adhérence du point adhésif (22) sur la bande de tôle (5).

2. Procédé selon la revendication 1,
**caractérisé en ce**
**que** la tête d'application (32) est déplacée de manière synchrone avec la course de travail de la presse à découper (9).

3. Procédé selon la revendication 1,
**caractérisé en ce**
**que** la tête d'application (32) est déplacée de manière non synchrone avec la course de travail de la presse à découper (9).

4. Procédé selon l'une des revendications précédentes,
**caractérisé en ce**
**que** la tête d'application (32) ne touche pas la surface de l'isolation de tôle (21) de la bande de tôle (5) ou de la lamelle de tôle (1) lors de la distribution du milieu adhésif, dans lequel la distance entre la tête d'application (32) et la bande de tôle (5) ou la lamelle de tôle (1) est de 5 mm au maximum, de préférence de 1 mm au maximum.

5. Procédé selon l'une des revendications précédentes,
**caractérisé en ce**
**que** la surface de l'isolation de tôle (21) de la lamelle de tôle (1) n'est que partiellement mouillée pendant l'application des points adhésifs (22).

6. Procédé selon l'une des revendications précédentes,
**caractérisé en ce**
**que** l'application des points adhésifs (22) sur l'isolation de tôle (21) de la bande de tôle (5) ou de la lamelle de tôle (1) est surveillée par capteur (33) quant à la présence et à l'importance d'un mouillage partiel.

7. Procédé selon l'une des revendications précédentes,
**caractérisé en ce**
**que** le volume du point adhésif (22) respectif est réglé.

8. Procédé selon l'une des revendications précédentes,
**caractérisé en ce**
**que** le volume du point adhésif (22) respectif est régulé de manière autonome par un circuit de régulation.

9. Procédé selon l'une des revendications précédentes,
**caractérisé en ce**
**que** l'application de plusieurs points adhésifs (22) sur la surface de la bande de tôle (5) ou de la lamelle de tôle (1) est effectuée par l'intermédiaire du distributeur (31) comportant au moins une amenée pour le milieu adhésif (34) et par l'intermédiaire de la tête d'application (32) raccordée au distributeur (31).

10. Procédé selon l'une des revendications précédentes,
**caractérisé en ce**
**que** l'unité d'application (35) pour l'application du point adhésif (22) se trouve à l'intérieur du processus de découpe (3).

11. Procédé selon l'une des revendications 1 à 10,
**caractérisé en ce**
**que** l'unité d'application (35) pour l'application du milieu adhésif (22) se trouve à l'extérieur du processus de découpe (3), en particulier en aval de celui-ci.

12. Procédé selon l'une des revendications 1 à 10,
**caractérisé en ce**
**que** l'application du milieu adhésif est effectuée au moyen d'une configuration dans laquelle le distributeur (31) et la tête d'application (32) se trouvent à l'intérieur du poinçon de perforation (43) de l'outil de découpe (10).

13. Dispositif pour la mise en œuvre du procédé selon la revendication 1, comportant une unité d'application (35) pour la fabrication de paquets de tôles (2) à partir de lamelles de tôle (1) qui présente une tête d'application (32), au moins un distributeur (31) pour le milieu adhésif et comportant au moins une amenée pour le milieu adhésif (34), et un bâti (30) permettant la réception du ou des distributeurs (31) et de l'au moins une tête d'application (32),
**caractérisé en ce**
**que** le distributeur (31) est fabriqué par un procédé additif, en particulier un procédé d'impression 3D.

14. Dispositif selon la revendication 13,
**caractérisé en ce**
**que** l'au moins un distributeur (31) pour le milieu adhésif est constitué d'un matériau métallique.

15. Dispositif selon la revendication 14,
**caractérisé en ce**
**que** l'au moins un distributeur (31) pour le milieu adhésif est fabriqué en un matériau non métallique, en particulier en une matière plastique, de préférence en une matière plastique thermodurcissable.

16. Dispositif selon la revendication 13 à 15,
**caractérisé en ce**
**que** la tête d'application (32) ne contient pas de composants mobiles, en particulier de composants entraînés.

17. Procédé selon l'une des revendications 14 à 16,
**caractérisé en ce**
**qu'**un capteur (33), en particulier un capteur optique (33), est prévu, lequel surveille la présence et l'importance du mouillage partiel d'une bande de tôle (5) ou des lamelles de tôle (1) avec les points adhésifs (22), dans lequel la surveillance par le capteur (33) est effectuée lors de l'application de milieu adhésif ou a lieu après l'application de milieu adhésif.

18. Procédé selon l'une des revendications 13 à 17,
**caractérisé en ce**
**que** le volume des points adhésifs (22) est réglable, en particulier de manière autonome par un circuit de régulation comportant un capteur (33) permettant de surveiller le mouillage partiel de la bande de tôle (5) ou des lamelles de tôle (1) avec les points adhésifs (22).

19. Dispositif selon l'une des revendications 13 à 18, comportant plusieurs têtes d'application,
**caractérisé en ce**
**que** la distance entre les têtes d'application (32) est de 5 mm au maximum, de préférence de 3 mm au maximum.
